# EUROPEAN PATENT APPLICATION

(11) **EP 4 836 074 A1**
(43) Date of publication of application: **04.11.2026**
(21) Application number: 25841530.6
(22) Date of filing: 07.07.2025
(51) Int. Cl.: H01M 10/44, H01M 4/525, H01M 4/505, H01M 4/36

(54) **LITHIUM SECONDARY BATTERY DRIVING METHOD**

(30) Priority: 17.07.2024 KR 20240094403
(71) Applicant: LG Energy Solution, Ltd., Seoul 07335 (KR)
(72) Inventor: JUNG, Haein, Daejeon 34122 (KR); HWANG, Insang, Daejeon 34122 (KR); KIM, Yojin, Daejeon 34122 (KR); KIM, Won Jung, Daejeon 34122 (KR); PARK, Jinseo, Daejeon 34122 (KR); CHO, Jaehyun, Daejeon 34122 (KR)
(74) Representative: Hoffmann Eitle
(86) International application number: PCT/KR2025/009788
(87) International publication number: WO 2026/019134

(57) **Abstract**

The present disclosure relates to a method for driving a lithium secondary battery, that can improve lifetime characteristics of a lithium secondary battery containing a lithium-rich manganese-rich oxide as a positive electrode active material, and also can suppress voltage sagging during driving.

## Description

### TECHNICAL FIELD

### Cross-Reference to Related Application(s)

This application claims the benefit of priority to Korean Patent Application no. 10-2024-0094403, filed on July 17, 2024, the disclosure of which is hereby incorporated by reference in its entirety.

The present disclosure relates to a method for driving a lithium secondary battery, that can improve lifetime characteristics of a lithium secondary battery containing a lithium-rich manganese-rich oxide as a positive electrode active material, and also can suppress voltage sagging during driving.

### BACKGROUND

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The lithium secondary battery generally consists of a positive electrode containing a positive electrode active material, a negative electrode containing a negative electrode active material, an electrolyte that serves as a medium for transferring lithium ions, and a separator. At this time, lithium transition metal oxides such as lithium cobalt oxide, lithium nickel oxide, and lithium nickel-cobalt-manganese composite oxide are mainly used as the positive electrode active material.

However, in order to reduce the unit price of the positive electrode active material and increase the energy density and capacity of the lithium secondary battery, lithium-rich manganese-rich oxide has recently been attracting attention as a next-generation positive electrode active material. Lithium-rich manganese-rich oxide can have a relatively low unit production cost by increasing the content of manganese(Mn), which is relatively inexpensive and has abundant reserves, and decreasing the content of cobalt(Co).

Further, the lithium-rich manganese-rich oxide has a structure in which lithium metal oxide with a layered structure and lithium manganese oxide (Li₂MnO₃) with a rock salt type structure are mixed. Thus, during the activation process and/or charge-discharge cycles, the lithium manganese oxide is further activated, thereby enabling the manganese redox reaction to contribute to realizing a capacity. Therefore, the lithium-rich manganese-rich oxide is a next-generation positive electrode active material with high capacity characteristics and low unit production cost, and interest and research thereon are increasing.

However, the typical driving voltage of a lithium secondary battery containing the lithium-rich manganese-rich oxide is known to be 3.0 to 4.3 V. Nevertheless, the additional capacity is not properly achieved through the manganese redox reaction at the typical driving voltage. As a result, if the lithium secondary battery is continuously driven under typical driving voltages, there is a disadvantage in that additional capacity is not properly achieved, and capacity retention and lifetime characteristics of the lithium secondary battery are deteriorated.

Conversely, if the lithium secondary battery is continuously driven under a changed voltage to achieve additional capacity through the manganese redox reaction, it causes structural changes and degeneration of the positive electrode active material, resulting in voltage sagging, which reduces the average discharge voltage, and ultimately affects the long lifetime characteristics of the lithium secondary battery.

Due to these issues, there is a continuing need for a driving method that can improve the lifetime characteristics of lithium secondary batteries containing the lithium-rich manganese-rich oxide and also suppress voltage sagging, etc.

### DETAILED DESCRIPTION OF THE INVENTION

### Technical Problem

It is an object of the present disclosure to provide a method for driving a lithium secondary battery, that can improve lifetime characteristics and capacity retention of a lithium secondary battery containing a lithium-rich manganese-rich oxide as a positive electrode active material, and also can suppress voltage sagging during driving.

### Technical Solution

According to an aspect of the present disclosure, there is provided a method for driving a lithium secondary battery comprising a positive electrode, a negative electrode, and an electrolyte, with the positive electrode including a positive electrode active material of lithium metal oxide, the method comprising:
a first driving step of conducting charge/discharge cycles on the lithium secondary battery between a first minimum discharge voltage and a first maximum charge voltage; and
a second driving step of conducting charge/discharge cycles on the lithium secondary battery between a second minimum discharge voltage and a second maximum charge voltage,
wherein the lithium metal oxide contains 50 mol% or more and less than 100 mol% of manganese, based on the total metal content excluding lithium, and
wherein the second minimum discharge voltage is lower than the first minimum discharge voltage, and while repeatedly performing the first driving step, the second driving step is performed at regular intervals.

### Advantageous Effects

According to the method for driving a lithium secondary battery of the present disclosure, the charge-discharge cycle proceeds with the application of a lower minimum discharge voltage at regular intervals, thereby being able to effectively achieve additional capacity through the manganese redox reaction.

Further, a relatively high minimum discharge voltage is applied during the remaining charge and discharge cycles, thereby being able to suppress the occurrence of voltage sagging during driving of the lithium secondary battery.

Therefore, according to the above driving method, it is possible to further improve the capacity retention and lifetime characteristics of a lithium secondary battery and also suppress voltage sagging and the like without changing the material of the positive electrode active material itself or the structure of the battery.

### BRIEF DESCRIPTION OF THE DRAWINGS

FIG. 1 is a graph showing the results of evaluating the capacity retention by cumulative energy for lithium secondary batteries of Examples and Comparative Examples.
FIG. 2 is a graph showing the results of evaluating the degree of voltage sagging for lithium secondary batteries of Examples and Comparative Examples.

### DETAILED DESCRIPTION OF THE EMBODIMENTS

A method for driving a lithium secondary battery according one embodiment of the present disclosure is a method for driving a lithium secondary battery comprising a positive electrode, a negative electrode, and an electrolyte, with the positive electrode including a positive electrode active material of lithium metal oxide, the method comprising:
a first driving step of conducting charge/discharge cycles on the lithium secondary battery between a first minimum discharge voltage and a first maximum charge voltage; and
a second driving step of conducting charge/discharge cycles on the lithium secondary battery between a second minimum discharge voltage and a second maximum charge voltage,
wherein the lithium metal oxide contains 50 mol% or more and less than 100 mol% of manganese, based on the total metal content excluding lithium, and
wherein the second minimum discharge voltage is lower than the first minimum discharge voltage, and while repeatedly performing the first driving step, the second driving step is performed at regular intervals.

In the driving method of one embodiment, a lithium secondary battery containing a lithium-rich manganese-rich oxide is driven by a method in which a cycle with lower minimum discharge voltage, namely a second driving step, is performed at regular cycle intervals of the first driving step.

In such a second driving step, as charging/discharging proceeds under the condition that the second minimum discharge voltage in the relevant section is controlled to a lower level, for example, 2.0 to 2.6 V or 2.1 to 2.5 V, additional capacity is effectively achieved through the manganese redox reaction, and the capacity retention of the lithium secondary battery can be further enhanced.

However, if such a low minimum discharge voltage and the second driving step are continuously applied, irreversible structural changes and degradation of the lithium-rich manganese-rich oxide may occur, which leads to voltage sagging where the average discharge voltage of the lithium secondary battery continuously decreases. Due to this voltage sagging, the overall energy density that takes both capacity and voltage into consideration may continuously decrease, and as a result, the lifetime characteristics of the lithium secondary battery may deteriorate.

Unlike the same, in the driving method of one embodiment, the second driving step is performed at regular intervals every certain cycle, thereby relatively suppressing structural changes and degeneration of the lithium-rich manganese-rich oxide, and as a result, suppressing the voltage sagging and deterioration in lifetime characteristics.

Therefore, according to the driving method of one embodiment, it is possible to further improve the capacity retention and lifetime characteristics of lithium secondary batteries containing lithium-rich manganese-rich oxide and also suppress voltage sagging and other issues.

A method for driving a lithium secondary battery according to one embodiment of the present disclosure is described in more detail below.

In the method for driving the lithium secondary battery of the embodiment above, the lithium secondary battery includes, as a positive electrode active material, a lithium metal oxide having a manganese content of 50 mol% or more and less than 100 mol% of the total metal content excluding lithium, for example, a lithium-rich manganese-rich oxide. More specifically, the lithium secondary battery may include a positive electrode containing such a positive electrode active material, a negative electrode, and an electrolyte.

In a specific embodiment, the lithium metal oxide serving as the lithium-rich manganese-rich oxide may be represented by the following Formula 1.

[Formula 1] Liₐ[Mn_{1-b-c}Ni_{b}M_{c}]₂₋ₐO₂

wherein in Formula 1,
M is at least one selected from the group consisting of Co, Fe, Cr, V, Cu, Zn, Ti, Al, Mg, B, W, Ga, In, Ru, Nb, Sn, Sr and Zr, and
a, b, and c are atomic fractions of each independent elements, wherein 1<a, 0≤b≤0.5, 0≤c≤0.5, and 0<b+c≤0.5.

Specifically, the a is a molar ratio of Li in the lithium-rich and manganese-rich oxide, which may be 1<a, 1.1≤a≤1.5, or 1.1≤a≤1.3. When the a satisfies the above range, high capacity can be achieved.

The b is a molar ratio of Ni in the lithium-rich manganese-rich oxide, which may be 0≤b≤0.5, 0.1≤b≤0.4, or 0.2≤b≤0.4.

The c is a molar ratio of a doping element M in the lithium-rich manganese-rich oxide, which may be 0≤c≤0.5, 0≤c≤0.3, or 0≤c≤0.1. The doping element M may be, for example, Co, and if the content of the doping element is too high, it may not only adversely affect the capacity of the active material, but also may aggravate gas generation and deterioration of the positive electrode active material due to an increase in the oxygen oxidation-reduction reaction, which may result in a deterioration in the lifetime characteristics.

The 1-b-c is a molar ratio of Mn in the lithium-rich manganese-rich oxide, which may be 0.50≤1-b-c<1.0, 0.50≤1-b-c≤0.80, or 0.50≤1-b-c≤0.70. When the 1-b-c is less than 0.5, that is, when b+c exceeds 0.5, the ratio of the rock salt phase becomes too low, so that the negative electrode irreversible compensation and capacity improving effects may be small.

In the case of the lithium-rich manganese-rich oxide, it may have a structure in which lithium metal oxide with a layered structure and lithium manganese oxide (Li₂MnO₃) with a rock salt structure are mixed. Among these, the lithium manganese oxide with a rock salt structure is activated at a high voltage of, for example, 4.6 V or more to generate excessive ions, which causes a manganese redox reaction under the second minimum discharge voltage in the second driving step, thereby contributing to achieving additional capacity.

Therefore, the driving method of one embodiment may further comprise a step of activating the lithium secondary battery after preparing the lithium secondary battery and before the first driving step described below. This activation step may be performed at a voltage of 4.6 V or more, or at a voltage of 4.6V to 4.9V. This activation step may further improve the capacity retention and lifetime characteristics of the lithium secondary battery. In a more specific embodiment, the activation may be performed, for example, through a process of charging up to a voltage of 4.6V or more at 0.1 C and 45°C, followed by discharging up to 2.0 V at 0.1 C, but is not limited thereto.

Meanwhile, in the lithium-rich manganese-rich oxide represented by Formula 1, the molar ratio (Li/Me) of Li to the total molar number of metal elements excluding Li may be 1.2 to 1.5, 1.25 to 1.5, or 1.30 to 1.45. When the Li/Me ratio satisfies the above range, rate and capacity characteristics are excellently exhibited. If the Li/Me ratio is too high, electrical conductivity decreases and the rock salt phase (Li₂MnO₃) increases, which may accelerate the degradation rate. If the Li/Me ratio is too low, the energy density improving effect is minimal.

On the other hand, the composition of the lithium-rich manganese-rich oxide may be represented by the following Formula 2:

[Formula 2] XLi₂MnO₃·(1-X)Li[Ni_{1-y-z-w}Mn_{y}Co_{z}M_{w}]O₂

wherein in Formula 2,
M is at least one selected from the group consisting of Fe, Cr, V, Cu, Zn, Ti, Al, Mg, B, W, Ga, In, Ru, Nb, Sn, Sr and Zr, wherein 0.2≤X≤0.5, 0.4≤y<1, 0≤z≤0.1, and 0≤w≤0.2.

The X means the ratio of Li₂MnO₃ phase (rock salt structure compound phase) in the lithium-rich manganese-rich oxide, wherein 0.2≤X≤0.5, 0.25≤X≤0.5, or 0.25≤X≤0.4. When the ratio of Li₂MnO₃ phase in the lithium-rich manganese-rich oxide satisfies the above range, high capacity characteristics may be realized.

The y may be a molar ratio of Mn in LiM'O₂ (M'= [Ni_{1-y-z}Mn_{y}M_{z}]; layered-structure compound phase), wherein 0.4≤y<1, 0.4≤y≤0.8, or 0.4≤y≤0.7.

The z may be a molar ratio of a doping element M in LiM'O₂ (M'= [Ni_{1-y-z}Mn_{y}M_{z}]; layered-structure compound phase), wherein 0≤z≤0.5, 0≤z≤0.3, or 0≤z≤0.1.

On the other hand, the positive electrode active material may optionally further include a coating layer on the surface of the lithium-rich manganese-rich oxide. When the positive electrode active material includes a coating layer, contact between the lithium-rich manganese-rich oxide and the electrolyte is suppressed by the coating layer, thereby reducing electrolyte side reactions and improving lifetime characteristics.

The coating layer may include a coating element M¹. The coating element M¹ may be, for example, at least one selected from the group consisting of Al, B, Co, W, Mg, V, Ti, Zn, Ga, In, Ru, Nb, Sn, Sr, and Zr. Preferably, it may be Al, Co, Nb, W, or a combination thereof, and more preferably, it may be Al, Co, or a combination thereof. The coating element M¹ may include two or more types, for example, Al and Co.

The coating element may exist in the coating layer in the form of an oxide, i.e., M¹O_{z} (1≤z≤4).

The coating layer can be formed by methods such as dry coating, wet coating, chemical vapor deposition(CVD), physical vapor deposition(PVD), and atomic layer deposition(ALD). Among these, it is preferable to form the coating layer by the atomic layer deposition in that the coating layer can be formed to have a large area.

Additionally, the area in which the coating layer is formed may range from 10% to 100%, or from 30% to 100%, or from 50% to 100%, based on the total surface area of the lithium-rich manganese-rich oxide particles. When the area in which the coating layer is formed satisfies the above range, the lifetime characteristic improving effect is excellent.

Meanwhile, the above-mentioned positive electrode active material may be in the form of secondary particles in which a plurality of primary particles are aggregated, and the average particle diameter D₅₀ of the secondary particles may be 2 µm to 10 µm, preferably 2 µm to 8 µm, and more preferably 4 µm to 8 µm. When the D₅₀ of the positive electrode active material satisfies the above range, the electrode density can be excellently achieved, and the deterioration of capacity and rate characteristics can be minimized.

Further, the positive electrode active material may have a BET specific surface area of 0.1 m²/g to 10 m²/g, specifically 0.1 m²/g to 5 m²/g, and more specifically 0.1 m²/g to 1 m²/g. If the BET specific surface area of the positive electrode active material is too low, the reaction area with the electrolyte is insufficient, which makes it difficult to achieve sufficient capacity, and if the specific surface area is too high, moisture absorption is fast, and side reactions with the electrolyte are accelerated, which makes it difficult to ensure lifetime characteristics.

Meanwhile, the lithium-rich manganese-rich oxide can be prepared by mixing a transition metal precursor and a lithium raw material and then calcinating them. However, since this preparation method may be based on the typical preparation process and conditions for a lithium-rich manganese-rich oxide, which are commonly known, and therefore, further description thereof will be omitted.

In addition, the lithium secondary battery to which the driving method of one embodiment is applied may be based on a configuration of a typical lithium secondary battery, except that the lithium-rich manganese-rich oxide is used as a positive electrode active material. For example, the lithium secondary battery can be produced by interposing a separator or an electrolyte membrane between a positive electrode containing a positive electrode active material and a negative electrode containing a negative electrode active material, sequentially stacking and drying them to prepare an electrode assembly, inserting the electrode assembly into a case, and then optionally injecting an electrolyte and sealing the case. The lithium secondary battery may be cylindrical, prismatic, coin-shaped, or pouch-shaped batteries.

The positive electrode and the negative electrode may be produced by coating a composition for forming an active material layer including an electrode active material onto a current collector and then drying the coating.

The composition for forming the positive electrode active material layer may, in addition to the positive electrode active material including the lithium-rich manganese-rich oxide, optionally further include a binder, a conductive material, a filler, and the like, if necessary. The composition for forming the positive electrode active material layer may, in addition to the lithium-rich and manganese-rich oxide-based positive electrode active material, optionally further include a binder, a conductive material, a filler, and the like, if necessary. The composition for forming the negative electrode active material layer may, in addition to the negative electrode active material, optionally further include a binder, a conductive agent, a filler, and the like, if necessary.

The current collector is not particularly limited as long as it has high conductivity without causing a chemical change in the battery, and, for example, copper, stainless steel, aluminum, nickel, titanium, calcinated carbon, or copper or stainless steel of which surface is treated with carbon, nickel, titanium, silver, or the like, an aluminum-cadmium alloy, or the like may be used. Further, the current collector may generally have a thickness of 3µm to 500 µm. Also, the current collector may have fine protrusions and depressions formed on a surface thereof to enhance adherence of an active material. For example, the current collector may be used in various forms such as a film, a sheet, a foil, a net, a porous body, a foaming body, and a non-woven fabric structure.

The positive electrode active material may further include a typical positive electrode active material in addition to the lithium-rich manganese-rich oxide described above, and for example, it may further include any one or more positive electrode active materials selected from the group consisting of LCO(LiCoO₂), LNO(LiNiO₂), LFP(LiFePO₄) and NCM(Li[NiₚCo_{q}Mnᵣ₁]O₂ (where 0<p<1, 0<q<1, 0<r1<1, p+q+r1=1), but preferably, it may include at least 70% by weight or more of the lithium-rich manganese-rich oxide based on the weight of the total positive electrode active material, and may be composed solely of the lithium-rich and manganese-rich oxide.

The positive electrode active material may be included in an amount of 80% to 99% by weight based on the total weight of the positive electrode active material layer.

In a specific embodiment, the negative electrode may include, as a negative electrode active material, at least one selected from the group consisting of a carbon-based material; a silicone-based material; metal or an alloy of lithium and the metal; a metal composite oxide; a material which may be doped and undoped with lithium; lithium metal; and a transition metal oxide, and preferably, it may include a carbon-based material, a silicon-based material, or a mixture thereof.

As the carbon-based material, any carbon-based negative electrode active material generally used in a lithium secondary battery may be used without particular limitation, and, as a typical example thereof, crystalline carbon, amorphous carbon, or both thereof may be used. Examples of the crystalline carbon may include graphite such as amorphous, planar, flaky, spherical or fibrous natural graphite or artificial graphite, and examples of the amorphous carbon include soft carbon (low-temperature calcined carbon), hard carbon, mesophase pitch carbide, and calcined cokes.

The silicon-based material is at least one selected from Si, SiOₓ (0<x<2), and a Si-Y alloy (where Y is an element selected from the group consisting of alkali metal, alkaline earth metal, a Group 13 element, a Group 14 element, transition metal, a rare earth element, and a combination thereof, and is not Si), and SiO is preferred. Silicon-based negative electrode active materials have a capacity nearly 10 times higher than that of graphite, and thus can lower the mass loading (mg·cm⁻²) to improve the rapid charging performance of batteries.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al and Sn, or an alloy of lithium and the metal may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z} (where Me is Mn, Fe, Pb, Ge; Me': Al, B, P, Si, Group I, II and III elements of the periodic table, halogen; 0<x≤1; 1≤y≤3; 1≤z≤8) may be used.

The material which may be doped and undoped with lithium may include Sn, SnO₂, Sn-Y (where Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with SiO₂.

In the Si-Y and Sn-Y, the element Y may be elected from the group consisting of Mg, Ca, Sr, Ba, Ra, Sc, Y, Ti, Zr, Hf, Rf, V, Nb, Ta, Db(dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide may include lithium-containing titanium composite oxide (LTO), vanadium oxide, lithium vanadium oxide, or the like.

The negative electrode active material may be included in an amount of 80% to 99% by weight based on the total weight of solids in the negative electrode slurry.

The binder is a component that assists in the binding between the conductive material, the active material, and the current collector, and is added in an amount of 0.1% to 10% by weight based on the total weight of the active material layer. Examples of the binder may include polyvinylidene fluoride(PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene polymer(EPDM), a sulfonated-EPDM, a styrene-butadiene rubber, a nitrile-butadiene rubber, a fluoro rubber, various copolymers thereof, or the like.

The conductive material is a component for further improving the conductivity of the active material, and may be added in an amount of 10% by weight or less, specifically 5% by weight or less based on the total weight of the active material layer. Such a conductive material is not particularly limited as long as it has conductivity without causing a chemical change in the battery, and, for example, graphite such as natural graphite or artificial graphite; carbon black such as acetylene black, Ketjen black, channel black, furnace black, lamp black, or thermal black; conductive fibers such as carbon fibers or metal fibers; carbon fluoride; metal powders such as aluminum, and nickel powders; conductive whiskers such as zinc oxide whiskers and potassium titanate whiskers; conductive metal oxide such as titanium oxide; a conductive material such as polyphenylene derivatives, and the like may be used.

Meanwhile, the lithium secondary battery may be provided by forming an electrolyte layer (or electrolyte-containing layer) between the positive electrode and the negative electrode without a separate separator, but may further include a separator interposed between the positive electrode and the negative electrode. Such a separator is to separate the negative electrode and the positive electrode and provide a movement path for lithium ions, and any separator may be used without particular limitation as long as it is a separator commonly used in a lithium secondary battery. Particularly, a separator having high moisture-retention ability for an electrolyte as well as low resistance to ion movement in the electrolyte is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Further, a typical porous nonwoven fabric, for example, a nonwoven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a single-layered or a multi-layered structure.

In addition, the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the production of a lithium secondary battery, but is not limited thereto.

In a specific embodiment, the electrolyte may include an organic solvent and a lithium salt.

Any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond, an aromatic ring or ether bond); amides such as dimethylformamide; dioxolanes such as 1,3-dioxolane; sulfolane, or the like can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/discharging performance of a battery, is more preferable.

The lithium salt can be used without particular limitation as long as it may provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. As the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)_{2.} LiCl, LiI, LiB(C₂O₄)₂ or the like may be used. The lithium salt may be used in a concentration range of 0.1M to 2.0M. When the concentration of the lithium salt is included within the above range, the electrolyte has suitable conductivity and viscosity, thereby exhibiting excellent electrolyte performance, and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 to 5% by weight based on a total weight of the electrolyte.

Meanwhile, in the driving method of one embodiment, a first driving step proceeds in which charge/discharge cycles are conducted on the lithium secondary battery between a first minimum discharge voltage and a first maximum charge voltage. In this first driving step, the first minimum discharge voltage may be 2.8 to 3.2 V, or 2.9 to 3.1 V, and the first maximum charge voltage may be 4.1 to 4.5 V, or 4.2 to 4.4 V.

In this first driving step, the metal cation redox reaction contained in the layered structure compound primarily contributes to achieving a capacity, and normal charging/discharging and driving of the lithium secondary battery can be achieved while structural changes or degradation of the lithium-rich manganese-rich oxide are suppressed. However, under the first minimum discharge voltage at which the first driving step proceeds, manganese redox reactions primarily caused by rock salt structure compounds and the additional capacity expression resulting from these reactions are difficult to achieve, and therefore, if only the first driving step is continuously performed, the capacity retention of lithium secondary batteries may decrease. On the other hand, if the first minimum discharge voltage becomes excessively high, the capacity expression by the metal cation redox reaction of the layered structure compound may not be properly achieved.

In the driving method of one embodiment, while the first driving step is repeatedly performed, a second driving step is performed at regular intervals, in which a lower second minimum discharge voltage is applied. This second driving step may, for example, conduct charge/discharge cycles between a second minimum discharge voltage lower than the first minimum discharge voltage and a second maximum charge voltage.

In a more specific embodiment, the second minimum discharge voltage may be 2.0 to 2.6 V, or 2.1 to 2.5 V, and the second maximum charge voltage may be 4.1 to 4.5 V, or 4.2 to 4.4 V. Thus, as a lower second minimum discharge voltage is applied in the second driving step, the manganese redox reaction caused by the rock salt structure compound and the additional capacity expression resulting therefrom may be effectively achieved.

However, if a lower second minimum discharge voltage is continuously applied or the minimum discharge voltage is continuously lowered in order to achieve this additional capacity, structural changes or degradation of the lithium-rich manganese-rich oxide continues to occur, which causes voltage sagging in lithium secondary batteries, ultimately resulting in a significant decrease in long-term lifetime characteristics.

Thus, in the driving method of one embodiment, for example, the first driving step is performed 2 to 15 times, or 2 to 14 times, or 3 to 13 times, and then the second driving step is performed regularly 1 to 2 times, thereby allowing efficient capacity expression through the manganese redox reaction while suppressing structural changes or degradation of the lithium-rich manganese-rich oxide. As a result, it is possible to improve the capacity retention and lifetime characteristics of a lithium secondary battery containing the lithium-rich manganese-rich oxide and also dramatically suppress voltage sagging.

Meanwhile, in the driving method of one embodiment, the charging in the first and second driving steps can be performed at rates of 0.05C to 2C, or 0.1C to 1.5C, or 0.2C to 1.2C. Additionally, the discharges in the first and second driving steps may be performed at rates of 0.05C to 3C, or 0.1C to 2C, or 0.2C to 1.2C.

In addition, in the driving method, charging may be performed using the CC-CV (constant current-constant voltage) method, and discharging may be performed using the CC (constant current) method.

Hereinafter, preferred examples are provided in order to assist in the understanding of the invention, however, the following examples are for illustrative purposes only, and it is obvious to those skilled in the art that various changes and modifications may be made within the category and technological ideas of the present disclosure, and such changes and modifications also fall within the scope of the attached claims.

### [Preparation Example]

A lithium-rich manganese-rich oxide having a composition of Li_{1.16}Ni_{0.305}Co_{0.004}Mn_{0.531}O₂ as a positive electrode active material, carbon nanotube as a conductive material, polyvinylidene fluoride as a binder and NBR as a dispersant were added in a weight ratio of 97.46:0.62:1.70:0.22 to N-methyl-2-pyrrolidone(NMP) as a solvent to prepare a positive electrode slurry. The positive electrode slurry was coated onto a positive electrode current collector (Al thin film) with a thickness of 12µm, dried, and then roll-pressed to produce a positive electrode.

Graphite and SiO (mixed in a weight ratio of 90:10) as a negative electrode active material, carbon black as a conductive material, SBR as a binder and CMC as a thickener were added in a weight ratio of 95.6:1.0:2.3:1.1 to water as a solvent to prepare a negative electrode slurry. The negative electrode slurry was coated onto a copper(Cu) thin film as a negative electrode current collector with a thickness of 8µm, dried and then roll-pressed to produce a negative electrode.

The electrolyte was prepared by mixing ethylene carbonate(EC): ethyl methyl carbonate(EMC) in a volume ratio of 30:70 and then dissolving LiPF₆ to a concentration of 1.0 M.

The positive electrode, the polyolefin-based porous separator coated with inorganic particles(Al₂O₃), and the negative electrode were sequentially stacked to prepare an electrode assembly. The assembled electrode assembly was housed in a pouch-type battery case, and the prepared nonaqueous electrolyte was injected to produce a lithium secondary battery.

### [Example]

### Example 1.

The lithium secondary battery produced in Preparation Example was connected to a PNE charger/discharger, and was charged to SOC of 100% (4.6V) at a rate of 0.1C at 45°C for about 10 hours, and then discharged to SOC of 0% (2.0V) at a rate of 0.1 C at 45°C for about 10 hours to perform activation (formation) process. The battery was aged at 60°C for 15 hours, and then subjected to a degassing process.

For the lithium secondary battery whose degassing was completed, the process of charging and discharging 9 times under the first charging/discharging conditions below and then charging and discharging once under the second charging/discharging conditions below was repeated 10 times, for a total of 100 charge and discharge cycles.
- First charge/discharge: charged under CC-CV (constant current-constant voltage) conditions up to 4.25V at a rate of 0.33C at 45°C, and discharged under CC conditions up to 3.0V at a rate of 0.33C.
- Second charge/discharge: charged under CC-CV (constant current-constant voltage) conditions up to 4.3V at 45°C at a rate of 0.33C, and discharged under CC conditions up to 2.5V at a rate of 0.33C.

### Example 2.

The lithium secondary battery produced in Preparation Example was connected to a PNE charger/discharger, and was charged to SOC of 100% (4.6V) at a rate of 0.1C at 45°C for about 10 hours, and then discharged to SOC of 0% (2.0V) at a rate of 0.1 C at 45°C for about 10 hours to perform activation (formation) process. The battery was aged at 60°C for 15 hours, and then subjected to a degassing process.

For the lithium secondary battery whose degassing was completed, the process of charging and discharging 4 times under the first charging/discharging conditions below and then charging and discharging once under the second charging/discharging conditions below was repeated 20 times, for a total of 100 charge and discharge cycles.
- First charge/discharge: charged under CC-CV (constant current-constant voltage) conditions up to 4.3V at a rate of 0.33C at 45°C, and discharged under CC conditions up to 3.0V at a rate of 0.33C.
- Second charge/discharge: charged under CC-CV (constant current-constant voltage) conditions up to 4.3V at 45°C at a rate of 0.33C, and discharged under CC conditions up to 2.5V at a rate of 0.33C.

### Example 3.

The lithium secondary battery produced in Preparation Example was connected to a PNE charger/discharger, and was charged to SOC of 100% (4.6V) at a rate of 0.1C at 45°C for about 10 hours, and then discharged to SOC of 0% (2.0V) at a rate of 0.1 C at 45°C for about 10 hours to perform activation (formation) process. The battery was aged at 60°C for 15 hours, and then subjected to a degassing process.

For the lithium secondary battery whose degassing was completed, the process of charging and discharging once under the first charging/discharging conditions below and then charging and discharging once under the second charging/discharging conditions below was repeated 50 times, for a total of 100 charge and discharge cycles.
- First charge/discharge: charged under CC-CV (constant current-constant voltage) conditions up to 4.3V at a rate of 0.33C at 45°C, and discharged under CC conditions up to 3.0V at a rate of 0.33C.
- Second charge/discharge: charged under CC-CV (constant current-constant voltage) conditions up to 4.3V at 45°C at a rate of 0.33C, and discharged under CC conditions up to 2.5V at a rate of 0.33C.

### Comparative Example 1.

The lithium secondary battery produced in Preparation Example was connected to a PNE charger/discharger, and was charged to SOC of 100% (4.6V) at a rate of 0.1C at 45°C for about 10 hours, and then discharged to SOC of 0% (2.0V) at a rate of 0.1 C at 45°C to perform activation (formation) process. The battery was aged at 60°C for 15 hours, and then subjected to a degassing process.

For the lithium secondary battery whose degassing was completed, charging and discharging were performed a total of 100 times under the first charging/discharging conditions below.
- First charge/discharge: charged under CC-CV (constant current-constant voltage) conditions up to 4.3V at a rate of 0.33C at 45°C, and discharged under CC conditions up to 3.0V at a rate of 0.33C.

### Comparative Example 2.

The lithium secondary battery produced in Preparation Example was connected to a PNE charger/discharger, and was charged to SOC of 100% (4.6V) at a rate of 0.1C at 45°C for about 10 hours, and then discharged to SOC of 0% (2.0V) at a rate of 0.1 C at 45°C for about 10 hours to perform activation (formation) process. The battery was aged at 60°C for 15 hours, and then subjected to a degassing process.

For the lithium secondary battery whose degassing was completed, charging and discharging were performed a total of 100 times under the second charging/discharging conditions below.
- Second charge/discharge: charged under CC-CV (constant current-constant voltage) conditions up to 4.3V at a rate of 0.33C at 45°C, and discharged under CC conditions up to 2.5V at a rate of 0.33C.

### [Experimental Example: Measurement of capacity retention and voltage sagging]

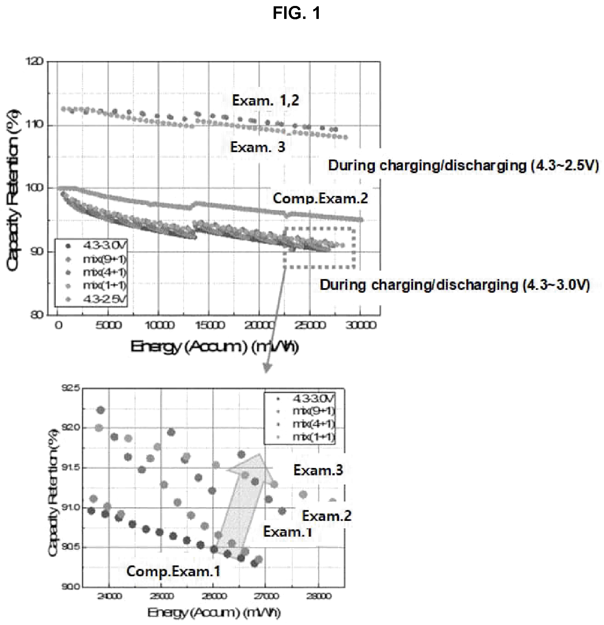

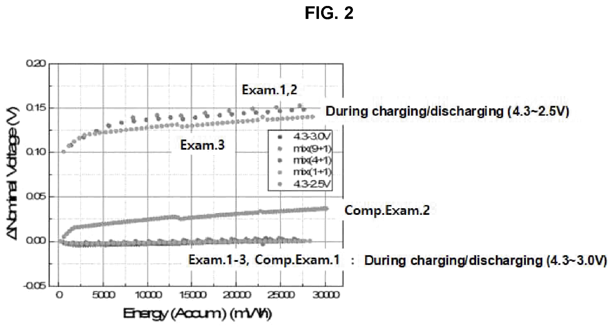

While performing charging and discharging as in Examples and Comparative Examples, the capacity retention and the amount of voltage sagging were measured through the process of measuring the capacity, discharge energy and discharge average voltage value corresponding to each cycle. FIG. 1 shows the results of evaluating the capacity retention by cumulative energy for lithium secondary batteries of Examples and Comparative Examples. FIG. 2 shows the results of evaluating the degree of voltage sagging for lithium secondary batteries of Examples and Comparative Examples. For reference, in the driving methods of Example 1 (mix(9+1)), Example 2 (mix(4+1)), and Example 3 (mix(1+1)), the voltage ranges of the first and second charge/discharge conditions are different from each other, so that energy ranges (retention) and average discharge voltages (voltage sagging) were derived differently for each charge/discharge condition. Therefore, the data for each charge/discharge condition is separately indicated as data at upper and lower ends.

Referring to FIGS. 1 and 2, it was confirmed that the lithium secondary batteries to which the driving conditions of Examples 1 to 3 were applied exhibited superior capacity retention compared to Comparative Example 1, even while exhibiting the degree of voltage sagging similar to that of Comparative Example 1. In particular, it was confirmed that Example 1 exhibited the highest capacity retention.

On the other hand, it was confirmed that when the driving conditions of Comparative Example 2 were applied, the capacity retention was relatively high (see FIG. 1), but large-width voltage sagging occurred as shown in FIG. 2, and significant structural changes and degeneration of the positive electrode active material occurred, resulting in a significant deterioration in lifetime characteristics.

## Claims

1. A method for driving a lithium secondary battery comprising a positive electrode, a negative electrode, and an electrolyte, with the positive electrode including a positive electrode active material of lithium metal oxide, the method comprising:
a first driving step of conducting charge/discharge cycles on the lithium secondary battery between a first minimum discharge voltage and a first maximum charge voltage; and
a second driving step of conducting charge/discharge cycles on the lithium secondary battery between a second minimum discharge voltage and a second maximum charge voltage,
wherein the lithium metal oxide contains 50 mol% or more and less than 100 mol% of manganese, based on the total metal content excluding lithium, and
wherein the second minimum discharge voltage is lower than the first minimum discharge voltage, and while repeatedly performing the first driving step, the second driving step is performed at regular intervals.

2. The method for driving a lithium secondary battery according to claim 1, wherein the lithium metal oxide includes a compound represented by the following Formula 1:
[Formula 1] Liₐ[Mn_{1-b-c}Ni_{b}M_{c}]₂₋ₐO₂
wherein in Formula 1,
M is at least one selected from the group consisting of Co, Fe, Cr, V, Cu, Zn, Ti, Al, Mg, B, W, Ga, In, Ru, Nb, Sn, Sr and Zr, and
a, b, and c are atomic fractions of each independent elements, wherein 1<a, 0≤b≤0.5, 0≤c≤0.5, and 0<b+c≤0.5.

3. The method for driving a lithium secondary battery according to claim 1, wherein the lithium metal oxide includes a compound represented by the following Formula 2:
[Formula 2] XLi₂MnO₃·(1-X)Li[Ni_{1-y-z-w}Mn_{y}Co_{z}M_{w}]O₂
wherein in Formula 2,
M is at least one selected from the group consisting of Fe, Cr, V, Cu, Zn, Ti, Al, Mg, B, W, Ga, In, Ru, Nb, Sn, Sr and Zr, wherein 0.2≤X≤0.5, 0.4≤y<1, 0≤z≤0.1, and 0≤w≤0.2.

4. The method for driving a lithium secondary battery according to claim 3, wherein the lithium metal oxide includes Li₂MnO₃ with a rock salt structure and Li[Ni_{1-y-z-w}Mn_{y}Co_{z}M_{w}]O₂ with a layered structure in a mixed state.

5. The method for driving a lithium secondary battery according to claim 1, wherein the first minimum discharge voltage is 2.8 to 3.2 V, and the second minimum discharge voltage is 2.0 to 2.6 V.

6. The method for driving a lithium secondary battery according to claim 1, wherein the first and second maximum charge voltages are 4.1 to 4.5 V.

7. The method for driving a lithium secondary battery according to claim 1, wherein after the first driving step is performed 1 to 15 times, the step of performing the second driving step 1 to 2 times is repeated.

8. The method for driving a lithium secondary battery according to claim 1, further comprising a step of activating (forming) the lithium secondary battery before the first driving step.

9. The method for driving a lithium secondary battery according to claim 8, wherein the activation step is performed under a voltage of 4.6 V or more.
